# EUROPÄISCHE PATENTSCHRIFT

(11) **EP 1 585 589 B1**
(45) Veröffentlichungstag und Bekanntmachung des Hinweises auf die Patenterteilung: **18.06.2008**
(21) Anmeldenummer: 03783943.8
(22) Anmeldetag: 31.07.2003
(51) Int. Cl.: B01D 63/08, C01B 3/50, H01M 8/06

(54) **MEMBRANMODUL ZUR WASSERSTOFFABTRENNUNG UND VERFAHREN ZU DESSEN HERSTELLUNG**
MEMBRANE MODULE FOR THE SEPARATION OF HYDROGEN AND METHOD FOR THE PRODUCTION THEREOF
MODULE A MEMBRANES POUR LA SEPARATION DE L'HYDROGENE ET PROCEDE DE FABRICATION DUDIT MODULE

(30) Priorität: 02.08.2002 DE 10235419
(43) Veröffentlichungstag der Anmeldung: 19.10.2005
(73) Patentinhaber: Daimler AG, 70327 Stuttgart (DE)
(72) Erfinder: POSCHMANN, Thomas, 89073 Ulm (DE)
(86) Internationale Anmeldenummer: PCT/DE2003/002568
(87) Internationale Veröffentlichungsnummer: WO 2004/014529

(56) Entgegenhaltungen:
- EP-A- 1 279 431
- WO-A-01/70376
- DE-B- 1 091 990
- US-A- 3 241 293
- US-A- 5 645 626

## Beschreibung

Die Erfindung betrifft ein Membranmodul zur Wasserstoffabtrennung und ein Verfahren zu dessen Herstellung.

Brennstoffzellensysteme, insbesondere solche für mobile Anwendungen, können durch Reformierung von Kohlenwasserstoffen wie zum Beispiel Methanol, Benzin oder Diesel mit Wasserstoff versorgt werden. Das in einem Reformierungsprozess entstandene Produktgas enthält neben Wasserstoff auch Kohlenmonoxid, Kohlendioxid und Wasserdampf. Insbesondere das Kohlenmonoxid muss für die Anwendung in der Brennstoffzelle entfernt werden, da dieses Gas als Katalysatorgift wirkt und zu einer Leistungseinbuße in der Brennstoffzelle führt.

Für die Wasserstoffabtrennung werden seit langem Membranen eingesetzt, die aus verschiedenen Materialien wie zum Beispiel Keramik, Glas, Polymer oder Metall bestehen können. Metallmembranen zeichnen sich durch eine hohe Selektivität für Wasserstoff und eine hohe Temperaturstabilität aus, haben aber vergleichsweise niedrige Permeationsraten.

Um eine gewünschte Permeationsrate zu erreichen, verwendet man eine Vielzahl von Membranzellen mit jeweils einer wasserstoffselektiven Membran, bei denen die einzelnen Membranen entweder nacheinander (seriell) oder nebeneinander (parallel) vom wasserstoffhaltigen Reformatgas angeströmt werden. Die Membranzellen werden aufeinander gestapelt, um ein kompaktes Membranmodul zu bilden.

Membranmodule mit serieller Anströmung sind zum Beispiel in der US 5 498 278 und der US 5 645 626 beschrieben.

Ein Membranmodul mit paralleler Anströmung, gemäß den Oberbegriffen der Patentansprüche 1 und 14, ist aus der WO 01/70376 bekannt. Jede Membranzelle des Membranmoduls enthält mehrere aufeinander gestapelte ovale oder ungefähr rechteckige Rahmen als Träger für wasserstoffselektive ebene Membranen und für eine luftdurchlässige Abstandshalteschicht zur Ableitung von Permeatgas, und außerdem zwei Zufuhrrahmen, die Zufuhrräume für Reformatgas umgeben. Alle Rahmen haben gleiche äußere Abmessungen und bilden einen kompakten Stapel mit glatten Außenflächen. Die Rahmen enthalten miteinander fluchtende Löcher, die Kanäle zur gemeinsamen Zu- bzw. Ableitung der Prozessgase bilden, nämlich erstens zur Zuleitung von wasserstoffhaltigem Reformatgas aus einem vorgeschalteten Reformierungsprozess, zweitens zur Ableitung des Raffinatgases, das heißt des wasserstoffabgereicherten Reformatgases, und drittens zur Ableitung des Permeatgases, das heißt des durch die Membranen diffundierten Wasserstoffs.

So ein Membranmodul mit paralleler Anströmung ist sehr vi el einfacher aufgebaut als ein Membranmodul mit serieller Anströmung, da keine Strukturen notwendig sind, die eine Umlenkung des Permeatgases von Zelle zu Zelle bewirken, wie bei serieller Gasführung erforderlich.

Dennoch ist der Fertigungsaufwand für das aus der WO 01/70376 bekannte Membranmodul beträchtlich, da die Umlenkung der Gase innerhalb der verschiedenen Rahmen erfolgt. Die Löcher in den Rahmen müssen mit hoher Genauigkeit hergestellt werden, da irgendwelche vorstehenden oder rückspringenden Rahmenteile oder Grate den Gasfluss behindern und die Herstellung von Gasdichtigkeit erschweren können. Noch schwerwiegender ist, dass fertigungsbedingte Ungenauigkeiten unterschiedliche Teilströme durch die einzelnen Membranzellen zur Folge haben können, wodurch die Permeationsrate verschlechtert wird, wie später noch erläutert wird. Schließlich müssen die Rahmen auf ganzer Fläche gasdicht miteinander verbunden werden, um die Kanäle und die Separationsräume zuverlässig leckfrei voneinander zu trennen.

Die DE-A-1091990 offenbart ein Membranmodul zur Wasserstoffabtrennung mit ebenen Membranzellen bestehend aus zwei wasserstoffselektiven Membranen umgeben von einem flächigen Rahmen ("Dichtungsstreifen"), einer Abstandshalteschicht sowie einem Zufuhrrahmen mit Öffnungen nach den Seitenflächen. Die einzelnen Teile werden mittels Bolzen und Klammern sowie Dichtungsstreifen verbunden.

Der Erfindung liegt die Aufgabe zugrunde, ein Membranmodul zu schaffen, das mit möglichst geringem Aufwand und ohne Verwendung von Dichtungen hergestellt werden kann, wobei keine Gefahr von Leckagen der Gasströme besteht.

Diese Aufgabe wird bei einem gattungsgemäßen Membranmodul erfindungsgemäß dadurch gelöst, dass die zwei Membranrahmen jeder Membranzelle aufeinander zu gerichtete erhabene Ränder haben, mit denen sie sich mit Ausnahme mindestens einer Öffnung nach einer Seitenfläche des Stapels hin berühren, dass der Zufuhrrahmen so ausgebildet ist, dass er mit Ausnahme von Öffnungen nach Seitenflächen des Stapels hin eng an den Rändern der Membranrahmen zweier benachbarter Membranzellen anliegt, und dass die Außenseiten aller Membranrahmen und Zufuhrrahmen unter Aussparung der Öffnungen gasdicht miteinander verschweißt oder verlötet sind.

Das Verfahren zur Herstellung des Membranmoduls ist in Anspruch 14 angegeben.

Indem sich die zwei Membranrahmen jeder Membranzelle an den erhabenen Rändern berühren, entfällt der sonst notwendige zusätzliche Rahmen für die luftdurchlässige AbstandshaLteschicht zwischen den Membranen der Membranzelle, durch die das Permeatgas abgeleitet wird. Die Dickendifferenz wird durch einen etwas höheren Zufuhrrahmen ausgeglichen, und aufgrund der größeren Höhe des Zufuhrrahmens können leicht Strukturen zur Formanpassung an die Membranrahmen sowie Öffnungen zur seitlichen Zu- und Ableitung der Reformat- und Raffinatgase darin ausgebildet werden.

Die erhabenen Ränder in den Membranrahmen haben eine gewisse Breite, damit sie flächig aufeinander liegen, und die Zufuhrrahmen sind am Rand schmaler als die erhabenen Ränder in den Membranrahmen und mit passenden Auskehlungen versehen, dass sie sich von hinten genau in die erhabenen Ränder einfügen.

Die Membranrahmen können einfach durch Stanzen beziehungsweise Prägen von Flachmaterial wie zum Beispiel Blech hergestellt werden, und die Zufuhrrahmen können spanend oder spanlos geformt werden.

Nachdem alle Rahmen eines Stapels aufeinander gelegt worden sind, wofür keine übermäßige Genauigkeit nötig ist, wird der Stapel einfach durch Verschweißen oder Verlöten der Außenseiten verbunden und gasdicht gemacht, wobei die Öffnungen für Zu- und Ableitung der Prozessgase offen gehalten werden. Zusammengehörende Öffnungen liegen dann übereinander und können auf einfache Weise mit einem passenden Zu- oder Ableitungskanal verbunden werden. Die Herstellung ist besonders einfach, wenn alle Rahmen aus Metall bestehen, da sie dann sowohl untereinander als auch mit den Zu- und Ableitungen durch Schweißen verbunden werden können.

Im gleichen Arbeitsgang wie zur Herstellung der erhabenen Ränder können außerdem Strukturen in die Membranrahmen geprägt werden, die das Reformatgas gleichmäßig auf den Zufuhrraum verteilen, vorzugsweise Stege, die auf die Reformatgas-Öffnung im Zufuhrrahmen ausgerichtet sind und die sich insbesondere in einer radialen Verteilung von der Reformatgas-Öffnung in Richtung auf eine Membrankante erstrecken.

Ein wesentlicher Vorteil des erfindungsgemäßen Membranmoduls ist, dass man mit nur wenigen verschiedenen Bauteilen auskommt, die einfach gestanzt bzw. geprägt werden können. Querschnitte, die den Strömungswiderstand und damit den Gasfluss bestimmen, ergeben sich dann durch Prägen, welches leicht mit hoher Genauigkeit erfolgen kann, so dass die einzelnen Teilströme durch die Membranzellen praktisch gleich sind und somit ein hoher Gesamtwirkungsgrad erreicht wird. Das gesamte Membranmodul kann geschweißt werden, so dass keine Leckströme von Kohlenmonoxid in das Permeatgas auftreten können, was durch Dichtungen nicht immer gewährleistet werden kann. Für die Zu- und Ableitung der Reformat-, Raffinat- und Permeatgase benötigt man jeweils nur ein zusätzliches Bauteil. Die Membranen können in rechteckiger Form verwendet werden, so dass der Membranverschnitt klein gehalten werden kann, und sie müssen nicht zur Permeatgasdurchführung gelocht werden. Durch die parallele Führung der Reformat- bzw. Raffinatgase sind keine Strukturen zur Gasumlenkung von Membranzelle zu Membranzelle nötig, wie sie bei serieller Strömungsführung erforderlich sind, so dass die Abmessungen des Membranmoduls klein gehalten werden können.

Weitere Merkmale und Vorteile der Erfindung ergeben sich aus den Unteransprüchen und aus der folgenden Beschreibung eines Ausführungsbeispiels anhand der Zeichnung. Darin zeigen:
Fig. 1 eine Prinzipskizze eines Membranmoduls mit einer Vielzahl von parallel angeströmten Membranen,
Fig. 2 eine Perspektivansicht eines Membranrahmens,
Fig. 3 eine Perspektivansicht eines Zufuhrrahmens,
Fig. 4 eine Perspektivansicht einer Membranzelle, und
Fig. 5 eine perspektivische Explosionsansicht eines Teils eines Membranmoduls einschließlich einer von zwei Endplatten.

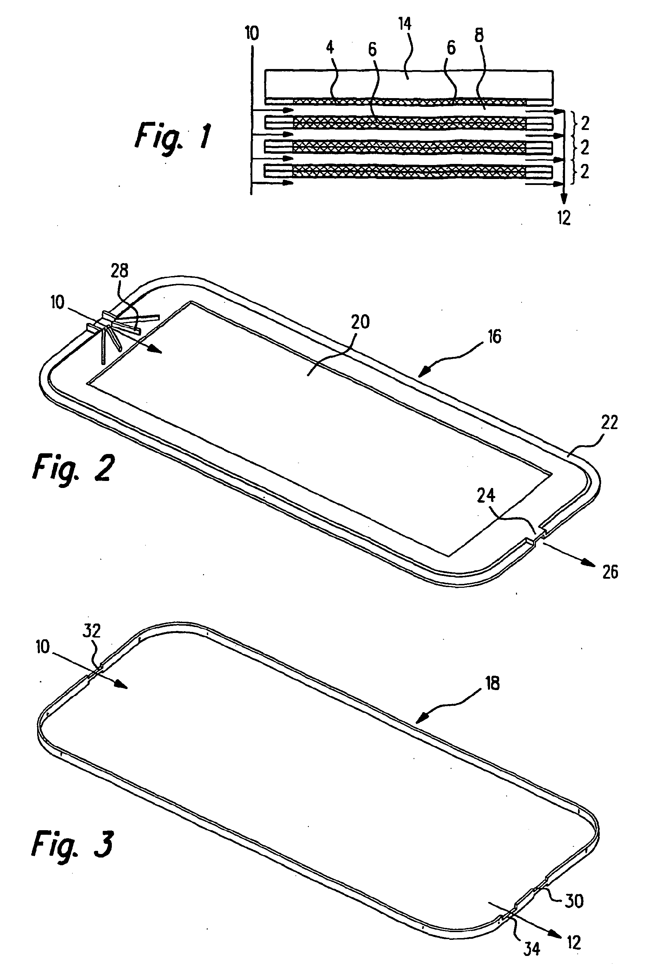

Wie in Fig. 1 gezeigt, besteht ein Membranmodul aus einer Vielzahl von übereinander angeordneten ebenen Membranzellen 2, die jeweils zwei wasserstoffselektive ebene Membranen 4 enthalten, zwischen denen eine luftdurchlässige Abstandshalteschicht 6 liegt.

Die Membranen 4 sind bevorzugt Metallfolien aus Palladium, Palladiumlegierungen oder refraktären Metallen wie Vanadium, Niob und Tantal und deren Legierungen. Sie gewährleisten eine nahezu unendliche Selektivität für Wasserstoff und somit eine zur Versorgung von Brennstoffzellen ausreichende Reinheit des Permeatgases. Alternativ können Verbundmembranen verwendet werden, zum Beispiel wasserstoffselektive Membranen auf einer porösen Trägerstruktur, die zum Beispiel aus Keramik oder porösem Edelstahl bestehen kann.

Je zwei Membranzellen 2 sind durch Zufuhrräume 8 voneinander getrennt, in die von einer Seite des Stapels Membranzellen 2 her unter Druck stehendes wasserstoffhaltiges Reformatgas 10 eingespeist wird, das in einem vorgeschalteten Reformierungsprozess zum Beispiel aus Methanol, Benzin oder Diesel gewonnen wird.

Ein Teil des im Reformatgas 10 enthaltenen Wasserstoffs diffundiert durch die Membranen 4 in die luftdurchlässige Abstandshalteschicht 6, wenn das wasserstoffhaltige Reformatgas an den Membranen 4 entlang strömt. Das heißt, der Wasserstoffgehalt bzw. der Wasserstoff-Partialdruck vermindert sich, während das Gas an den Membranen 4 entlang strömt und als wasserstoffabgereichertes Raffinatgas 12 an der dem Reformatgas-Einlass entgegengesetzten Seite aus dem Stapel Membranzellen 2 austritt, wie in Fig. 1 mit Pfeilen angezeigt.

Das durch die Membranen 4 diffundierte Permeatgas ist hochreiner Wasserstoff, der in der Abstandshalteschicht 6 gesammelt und seitlich abgeleitet wird (in Fig. 1 nicht gezeigt).

Am oberen und unteren Ende des Stapels Membranzellen 2 befinden sich angrenzend an den letzten Zufuhrraum 8 jeweils eine einzelne wasserstoffselektive Membran 4, eine luftdurchlässige Abstandshalteschicht 6 und eine Endplatte 14 zur Abdichtung und zur Abstützung der letzten Schichten gegen den inneren Gasdruck des Membranmoduls. In Fig. 1 ist nur eine obere Endplatte 14 gezeigt.

Es hat sich gezeigt, dass die theoretisch maximal mögliche Permeationsrate nicht nur bei Membranmodulen mit serieller Anströmung erreicht wird, wie sie zum Beispiel in der US 5 498 278 und der US 5 645 626 beschrieben sind, sondern auch bei paralleler Anströmung wie in Fig. 1, sofern die mit Pfeilen angezeigten einzelnen Teilströme durch die Zufuhrräume 8 gleich groß sind. Ferner wurde durch Simulation für zehn Teilströme festgestellt, dass selbst bei unterschiedlichen Teilströmen mit Abweichungen von 10 % voneinander die Permeationsrate unter praxisnahen Simulationsvoraussetzungen nur um maximal 3 % geringer ist als die theoretisch maximal mögliche Permeationsleistung. Andererseits kann bei geeigneter Ausführung der Querschnitte der Reformatgaszuleitung und der Raffinatgasableitung auch bei paralleler Anströmung gewährleistet werden, dass die Teilströme nahezu gleich sind (da der Strömungswiderstand in alles Strömungskanälen gleich groß ist).

Ein Membranmodul, bei dem nahezu gleiche Teilströme gewährleistet werden können und das dennoch mit wenig Aufwand hergestellt werden kann, wird nun anhand von Figuren 2 bis 5 im Detail beschrieben, wobei funktionsgleiche Bestandteile wie in Fig. 1 die gleichen Bezugszeichen haben.

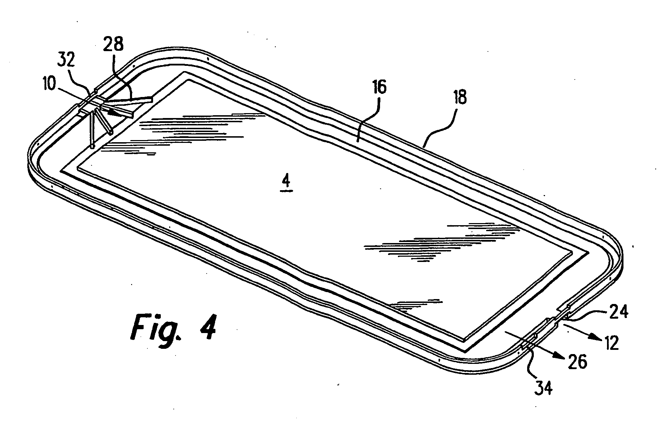

Jede Membranzelle 2 enthält zwei flächige Membranrahmen 16, von denen einer in Fig. 2 gezeigt ist, die jeweils eine Membran 4 tragen. Weiterhin enthält jede Membranzelle 2 eine luftdurchlässige Abstandshalteschicht 6 zwischen den Membranen 4 sowie einen ringförmigen Zufuhrrahmen 18 (Fig. 3), der die gleichen äußeren Abmessungen wie die Membranrahmen 16 hat, wobei die äußeren Abmessungen hier durch ein Rechteck mit gerundeten Ecken gebildet werden. Eine einzelne Membranzelle 2 im zusammengebauten Zustand ist in Fig. 4 gezeigt.

Wie in Fig. 2 gezeigt, ist jeder Membranrahmen 16 ein im wesentlichen ebenes, aus Edelstahlblech gestanztes Bauteil in Form eines Rechtecks mit gerundeten Ecken, das in der Mitte eine rechteckige Öffnung 20 für die Membran 4 hat und in das ein erhabener Rand 22 geprägt ist. Der erhabene Rand 22 hat eine gewisse Breite, auf der er eben ist, und erstreckt sich parallel zu der Ebene des inneren Bereichs des Membranrahmes 16 in einem kleinen Abstand davon versetzt, und zwar in Fig. 2 nach unten. In einem Abschnitt in der Mitte einer Schmalseite des Membranrahmens 16 ist das Blech nicht zu dem erhabenen Rand 22 geprägt, sondern erstreckt sich in der gleichen Ebene wie der innere Bereich des Membranrahmes 16, so dass der erhabene Rand 22 in diesem Abschnitt eine Auskehlung 24 enthält, durch die das Permeatgas 26 abgeleitet wird.

Auf der in Fig. 2 oben liegenden Oberfläche des Membranrahmens 16 stehen vier Stege 28 hervor, die sich ungefähr von der Mitte der Schmalseite des Membranrahmens 16, die der Schmalseite mit der Auskehlung 24 entgegengesetzt ist, sternförmig bis nahe an die rechteckige Öffnung 20 im Membranrahmen 16 erstrecken. Die Stege 28 bilden zusammen mit den Stegen 28 eines angrenzenden Membranrahmens 16 eine Verteilerstruktur, die das Reformatgas 10, das an dieser Seite des Membranrahmens 16 zugeführt wird, gleichmäßig auf die gesamte Breite der Membran 4 verteilt.

Die Stege 28 können im gleichen Arbeitsgang in das Blech des Membranrahmens 16 geprägt werden, in dem der erhabene Rand 22 geprägt wird, und das Prägen kann im gleichen Arbeitsgang wie das Ausstanzen des Membranrahmens 16 aus Blechmaterial erfolgen.

Der in Fig. 3 gezeigte Zufuhrrahmen 18 hat die Form eines ringförmig geschlossenen Streifens, der einen Zufuhrraum 8 (Fig. 1) für Reformatgas 10 nach den Seiten des Membranmoduls hin abschließt. Der ringförmige Zufuhrrahmen 18 ist etwas höher als ein Membranrahmen 16 insgesamt dick ist, schmaler als die erhabenen Ränder 22 in den Membranrahmen 16 und mit Auskehlungen 30 versehen, die den Auskehlungen 24 in den Membranrahmen 16 entsprechen, so dass er sich genau in die erhabenen Ränder 22 schmiegt, wenn er mit den Membranrahmen 16 zweier benachbarter Membranzellen 4 zusammengefügt wird. Der Zufuhrrahmen 18 kann zum Beispiel durch Prägen oder durch Fräsen, Biegen und Zusammenschweißen von Strangmaterial hergestellt werden.

Der Zustand, in dem ein Zufuhrrahmen 18 (in einer gegenüber der Lage von Fig. 3 um seine Längsachse gewendeten Lage) auf dem Membranrahmen 16 aufliegt, ist in Fig. 4 gezeigt. Auf die entgegengesetzte Seite des Membranrahmens 16 wird ein weiterer Membranrahmen 16 aufgelegt (in einer gegenüber der Lage von Fig. 2 um seine Längsachse gewendeten Lage). Wie man sieht, bilden die Auskehlungen 24 in den beiden Membranrahmen 16 einen Permeatauslasskanal zur Ableitung des Permeatgases 26.

Wie in Fig. 3 zu sehen ist, enthält der Zufuhrrahmen 18 außerdem Auskehlungen 32 und 34, die zusammen mit dem daran angrenzenden Membranrahmen 16 einen Einlasskanal für das Reformatgas 10 und einen Auslasskanal für das Raffinatgas 12 bilden, die in Fig. 4 zu erkennen sind.

Bevor die Membranrahmen 16 wie in Fig. 4 gezeigt zusammengefügt werden, werden die Membranen 4, die ein wenig größer als die rechteckige Öffnung 20 in jedem Membranrahmen 16 sind, gasdicht auf die Ränder der Öffnungen 20 geschweißt, vorzugsweise auf der Seite der Abstandshalteschicht 6, damit die Membran 4 direkt auf der Abstandshalteschicht 6 aufliegt. Die Membranen 4 können mittels verschiedener Schweißverfahren wie zum Beispiel Elektronenstrahlschweißen, Laserstrahlschweißen, Ultraschallschweißen oder Widerstands-Rollnahtschweißen oder mittels Lötverfahren mit den jeweiligen Membranrahmen 16 verbunden werden. Zwischen je zwei Membranrahmen 16 wird eine Abstandshalteschicht 6 gelegt, die doppelt so dick ist, wie der erhabene Rand 22 des Membranrahmens 16 vom inneren Bereich des Membranrahmes 16 versetzt ist.

Die Abstandshalteschicht 6 besteht zum Beispiel aus einem Edelstahlnetz oder -vlies oder aus einer Mehrschichtstruktur und hat die Funktion, die Membranen 4 im Betrieb gegen die transmembrane Druckdifferenz zwischen Reformatgas 10 und Permeatgas 26 abzustützen und das durch die Membranen 4 diffundierte Permeatgas 26 parallel zur Membranoberfläche in Richtung auf den Permeatauslasskanal abzuleiten.

Zur Herstellung eines vollständigen Membranmoduls werden eine Vielzahl der in Fig. 4 gezeigten Membranzellen 2 aufeinander gestapelt. Am oberen und am unteren Ende des Stapels Membranzellen 2 werden jeweils ein einzelner Membranrahmen 16 mit eingebauter Membran 4 und eine Abstandshalteschicht 6 angeordnet. Zuletzt werden stabile Endplatten 14 aufgesetzt, die das Membranmodul gegen den inneren Gasdruck zusammenhalten.

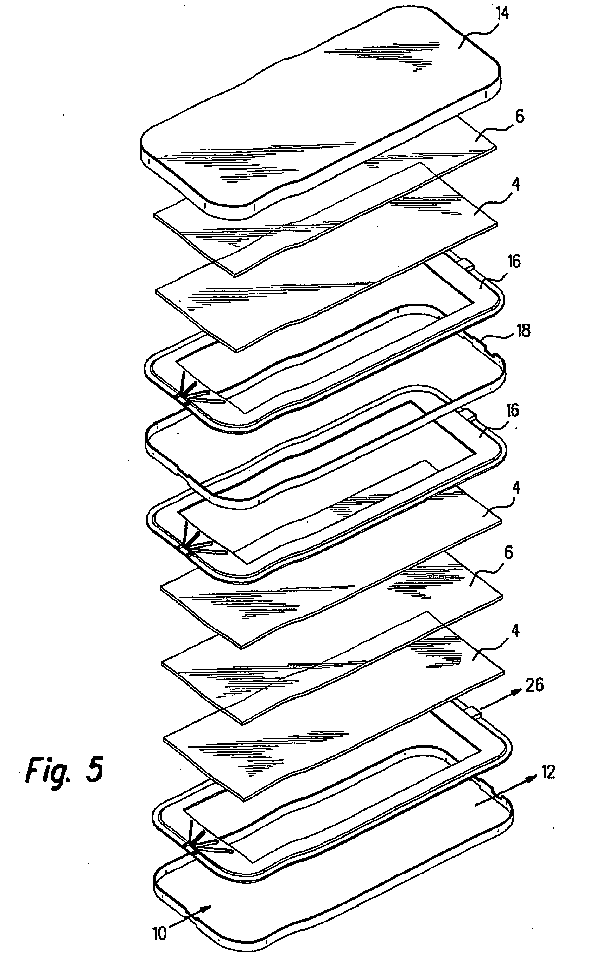

Diese Art von Zellenabschlusskonstruktion, die schon anhand von Fig. 1 allgemein beschrieben wurde, ist in Fig. 5 detaillierter zu erkennen, die eine Explosionsansicht des obersten Teils des Membranmoduls einschließlich zweier Membranzellen 2 ist. Durch die Zellenabschlusskonstruktion mit einem einzelnen Membranrahmen 16 unter der Abstandshalteschicht 6 und der Endplatte 14 wird erreicht, dass Reformatgas-Teilströme, die den Endplatten 14 am nächsten durch das Membranmodul geführt werden, die gleiche Membranfläche überströmen wie alle anderen Teilströme.

An dem zusammengesetzten Stapel Membranzellen 2 werden die Membranrahmen 16, die Zufuhrrahmen 18 und die Endplatten 14 miteinander verschweißt, wodurch ein kompakter Stapel entsteht, der bis auf die Ein- und Auslasskanäle für das Reformatgas 10, das Raffinatgas 12 und das Permeatgas 26 gasdicht ist. Die Ein- und Auslasskanäle für das Reformatgas 10, das Raffinatgas 12 und das Permeatgas 26 liegen jeweils genau übereinander und bilden jeweils ein Rechteck, auf das ein passendes Zu- bzw. Ableitungsrohr oder dergleichen geschweißt wird.

## Patentansprüche

1. Membranmodul zur Wasserstoffabtrennung, mit einer Vielzahl von ebenen Membranzellen, die jeweils zwei wasserstoffselektive ebene Membranen, die jeweils von einem flächigen Membranrahmen umgeben sind, eine zwischen den Membranen angeordnete luftdurchlässige Abstandshalteschicht zur Ableitung von Permeatgas und einen Zufuhrrahmen enthalten, der einen Zufuhrraum für Reformatgas umgibt, wobei alle Membranrahmen und Zufuhrrahmen gleiche äußere Abmessungen haben und einen Stapel mit ebenen Seitenflächen bilden,
**dadurch gekennzeichnet, dass** die zwei Membranrahmen (16) jeder Membranzelle (2) aufeinander zu gerichtete erhabene Ränder (22) haben, mit denen sie sich mit Ausnahme mindestens einer Öffnung (24) nach einer Seitenfläche des Stapels hin berühren, dass der Zufuhrrahmen (18) so ausgebildet ist, dass er mit Ausnahme von Öffnungen (32, 34) nach Seitenflächen des Stapels hin eng an den Rändern der Membranrahmen (16) zweier benachbarter Membranzellen (2) anliegt, und dass die Außenseiten aller Membranrahmen (16) und Zufuhrrahmen (18) unter Aussparung der Öffnungen (24, 32, 34) gasdicht miteinander verschweißt oder verlötet sind.

2. Membranmodul nach Anspruch 1,
**dadurch gekennzeichnet, dass** die Membranrahmen (16) Stege (28) enthalten, die auf eine der Öffnungen (32) im Zufuhrrahmen (18) ausgerichtet sind.

3. Membranmodul nach Anspruch 2,
**dadurch gekennzeichnet, dass** sich die Stege (28) in einer radialen Verteilung von der Öffnung (32) im Zufuhrrahmen (18) in Richtung auf eine Membrankante erstrecken.

4. Membranmodul nach einem der vorhergehenden Ansprüche,
**dadurch gekennzeichnet, dass** die Membranrahmen (16) aus einem flächigen Material bestehen, in das die erhabenen Ränder (22) und die mindestens eine Öffnung (24) und/oder die Stege (28) geprägt sind.

5. Membranmodul nach einem der vorhergehenden Ansprüche,
**dadurch gekennzeichnet, dass** die Membranrahmen (16) aus geprägtem Blech bestehen.

6. Membranmodul nach Anspruch 5,
**dadurch gekennzeichnet, dass** die zwei Membranrahmen (16) jeder Membranzelle (2) an ihren erhabenen Rändern (22) miteinander verschweißt sind.

7. Membranmodul nach einem der vorhergehenden Ansprüche,
**dadurch gekennzeichnet, dass** die Zufuhrrahmen (18) ringförmig geschlossene Streifen sind, die schmaler als die erhabenen Ränder (22) der Membranrahmen (16) sind.

8. Membranmodul nach Anspruch 7,
**dadurch gekennzeichnet, dass** die Öffnungen (32, 34) in den Zufuhrrahmen (18) Auskehlungen in den Streifen sind.

9. Membranmodul nach einem der vorhergehenden Ansprüche,
**dadurch gekennzeichnet, dass** die Zufuhrrahmen (18) aus Metall bestehen.

10. Membranmodul nach Anspruch 6 und Anspruch 9,
**dadurch gekennzeichnet,dass** die Membranrahmen (16) und die Zufuhrrahmen (18) miteinander verschweißt sind.

11. Membranmodul nach Anspruch 10,
**dadurch gekennzeichnet, dass** an die Seitenflächen des Stapels Kanäle geschweißt sind, die jeweils einander entsprechende Öffnungen (24) in den Membranrahmen (16) beziehungsweise Öffnungen (32, 34) in den Zufuhrrahmen (18) miteinander und mit der Außenseite verbinden.

12. Membranmodul nach einem der vorhergehenden Ansprüche,
**dadurch gekennzeichnet, dass** auf dem obersten und dem untersten Zufuhrraum (8) des Stapels Membranzellen (2) jeweils in dieser Reihenfolge ein Membranrahmen (16) mit eingebauter Membran (4), eine Abstandshalteschicht (6) und eine Endplatte (14) angeordnet sind.

13. Membranmodul nach einem der vorhergehenden Ansprüche,
**dadurch gekennzeichnet, dass** die äußeren Abmessungen der Membranrahmen (16), der Zufuhrrahmen (18) beziehungsweise der Endplatten (14) durch ein Rechteck mit gerundeten Ecken gebildet werden.

14. Verfahren zur Herstellung eines Membranmoduls zur Wasserstoffabtrennung, bei dem eine Vielzahl von ebenen Membranzellen aufeinander gestapelt und miteinander verbunden werden, wobei jede Membranzelle aus zwei wasserstoffselektiven ebenen Membranen, die jeweils von einem flächigen Membranrahmen umgeben sind, einer zwischen den Membranen angeordneten luftdurchlässigen Abstandshalteschicht zur Ableitung von Permeatgas und einem Zufuhrrahmen aufgebaut wird, der einen Zufuhrraum für Reformatgas umgibt, wobei alle Membranrahmen und Zufuhrrahmen gleiche äußere Abmessungen haben und zu einen Stapel mit ebenen Seitenflächen zusammengesetzt werden,
**dadurch gekennzeichnet, dass** die zwei Membranrahmen (16) jeder Membranzelle (2) mit aufeinander zu gerichteten erhabenen Rändern (22) ausgebildet und mit den Rändern aufeinander gelegt werden, wobei die erhabenen Ränder (22) so ausgebildet werden, dass mindestens eine Öffnung (24) nach einer Seitenfläche des Stapels hin frei bleibt, dass der Zufuhrrahmen (18) so ausgebildet wird, dass er mit Ausnahme von Öffnungen (32, 34) nach Seitenflächen des Stapels hin eng auf die Ränder (22) der Membranrahmen (16) zweier benachbarter Membranzellen (2) passt, und dass die Außenseiten aller Membranrahmen (16) und Zufuhrrahmen (18) unter Aussparung der Öffnungen (24, 32, 34) gasdicht miteinander verschweißt oder verlötet werden.

15. Verfahren nach Anspruch 14,
**dadurch gekennzeichnet, dass** die Membranrahmen (16) mit Stegen (28) versehen werden, die auf eine der Öffnungen (32) im Zufuhrrahmen (18) ausgerichtet sind.

16. Verfahren nach Anspruch 15,
**dadurch gekennzeichnet, dass** die Stege (28) so ausgebildet werden, dass sie sich in einer radialen Verteilung von der Öffnung (32) im Zufuhrrahmen (18) in Richtung auf eine Membrankante erstrecken.

17. Verfahren nach einem der Ansprüche 14 bis 16,
**dadurch gekennzeichnet, dass** die Membranrahmen (16) aus einem flächigen Material hergestellt werden, in das die erhabenen Ränder (22) und die mindestens eine Öffnung (24) und/oder die Stege (28) geprägt werden.

18. Verfahren nach einem der Ansprüche 14 bis 17,
**dadurch gekennzeichnet, dass** die Membranrahmen (16) aus Blech geprägt werden.

19. Verfahren nach Anspruch 18,
**dadurch gekennzeichnet, dass** die zwei Membranrahmen (16) jeder Membranzelle (2) an ihren erhabenen Rändern (22) miteinander verschweißt werden.

20. Verfahren nach einem der Ansprüche 14 bis 19,
**dadurch gekennzeichnet, dass** die Zufuhrrahmen (18) ringförmig geschlossene Streifen sind, die schmaler als die erhabenen Ränder (22) der Membranrahmen (16) sind.

21. Verfahren nach Anspruch 20,
**dadurch gekennzeichnet, dass** die Öffnungen (32, 34) in den Zufuhrrahmen (18) durch Auskehlungen in den Streifen gebildet werden.

22. Verfahren nach einem der Ansprüche 14 bis 21,
**dadurch gekennzeichnet, dass** die Zufuhrrahmen (18) aus Metall hergestellt werden.

23. Verfahren nach Anspruch 18 und Anspruch 22,
**dadurch gekennzeichnet, dass** die Membranrahmen (16) und die Zufuhrrahmen (18) miteinander verschweißt werden.

24. Verfahren nach Anspruch 23,
**dadurch gekennzeichnet, dass** an die Seitenflächen des Stapels Kanäle geschweißt werden, die jeweils einander entsprechende Öffnungen (24) in den Membranrahmen (16) beziehungsweise Öffnungen (32, 34) in den Zufuhrrahmen (18) miteinander und mit der Außenseite verbinden.

25. Verfahren nach einem der Ansprüche 14 bis 24,
**dadurch gekennzeichnet, dass** auf dem obersten und dem untersten Zufuhrraum (8) des Stapels Membranzellen (2) jeweils in dieser Reihenfolge ein Membranrahmen (16) mit eingebauter Membran (4), eine Abstandshalteschicht (6) und eine Endplatte (14) angeordnet werden.

26. Verfahren nach einem der Ansprüche 14 bis 25,
**dadurch gekennzeichnet, dass** die äußeren Abmessungen der Membranrahmen (16), der Zufuhrrahmen (18) beziehungsweise der Endplatten (14) durch ein Rechteck mit gerundeten Ecken gebildet werden.

## Claims

1. Membrane module for separating off hydrogen, having a multiplicity of planar membrane cells, which each include two hydrogen-selective planar membranes that are each surrounded by a flat membrane frame, an air-permeable spacer layer that is arranged between the membranes in order to discharge permeate gas, and a feed frame that surrounds a feed space for reformate gas, all the membrane frames and feed frames having identical external dimensions and forming a stack with planar side faces, **characterized in that** the two membrane frames (16) of each membrane cell (2) have raised edges (22) which are directed toward one another and by means of which they are in contact with one another with the exception of at least one opening (24) toward one side face of the stack, **in that** the feed frame (18) is designed in such a way that, with the exception of openings (32, 34) toward side faces of the stack, it bears closely against the edges of the membrane frames (16) of two adjacent membrane cells (2), and **in that** the outer sides of all the membrane frames (16) and feed frames (18) are welded or soldered to one another in a gastight manner, but leaving clear the openings (24, 32, 34).

2. Membrane module according to Claim 1, **characterized in that** the membrane frames (16) include webs (28) which are directed toward one of the openings (32) in the feed frame (18).

3. Membrane module according to Claim 2, **characterized in that** the webs (28) extend in a radial distribution from the opening (32) in the feed frame (18) in the direction of a membrane edge.

4. Membrane module according to one of the preceding claims, **characterized in that** the membrane frames (16) consist of a flat material into which the raised edges (22) and the at least one opening (24) and/or the webs (28) are stamped.

5. Membrane module according to one of the preceding claims, **characterized in that** the membrane frames (16) consist of stamped metal sheet.

6. Membrane module according to Claim 5, **characterized in that** the two membrane frames (16) of each membrane cell (2) are welded together at their raised edges (22).

7. Membrane module according to one of the preceding claims, **characterized in that** the feed frames (18) are continuous annular strips which are narrower than the raised edges (22) of the membrane frames (16).

8. Membrane module according to Claim 7, **characterized in that** the openings (32, 34) in the feed frames (18) are recesses in the strips.

9. Membrane module according to one of the preceding claims, **characterized in that** the feed frames (18) consist of metal.

10. Membrane module according to Claim 6 and Claim 9, **characterized in that** the membrane frames (16) and the feed frames (18) are welded together.

11. Membrane module according to Claim 10, **characterized in that** passages are welded to the side faces of the stack and in each case connect corresponding openings (24) in the membrane frames (16) and/or openings (32, 34) in the feed frames (18) to one another and to the outer side.

12. Membrane module according to one of the preceding claims, **characterized in that** membrane cells (2) are arranged on the topmost and bottommost feed spaces (8) of the stack, in each case in the following order: a membrane frame (16) with installed membrane (4), a spacer layer (6) and an end plate (14).

13. Membrane module according to one of the preceding claims, **characterized in that** the external dimensions of the membrane frames (16), of the feed frames (18) and/or of the end plates (14) are formed by a rectangle with rounded corners.

14. Method for producing a membrane module for separating off hydrogen, in which a multiplicity of planar membrane cells are stacked on top of one another and connected to one another, each membrane cell being constructed from two hydrogen-selective, planar membranes that are each surrounded by a flat membrane frame, an air-permeable spacer layer that is arranged between the membranes in order to discharge permeate gas, and a feed frame that surrounds a feed space for reformate gas, all the membrane frames and feed frames having identical external dimensions and being assembled to form a stack with planar side faces, **characterized in that** the two membrane frames (16) of each membrane cell (2) are designed with raised edges (22) which are directed toward one another and are placed on top of one another by means of the edges, the raised edges (22) being designed in such a way that at least one opening (24) toward a side face of the stack is left clear, **in that** the feed frame (18) is designed in such a way that with the exception of openings (32, 34) toward side faces of the stack it fits tightly onto the edges (22) of the membrane frames (16) of two adjacent membrane cells (2), and **in that** the outer sides of all the membrane frames (16) and feed frames (18) are welded or soldered to one another in a gastight manner, but leaving clear the openings (24, 32, 34).

15. Method according to Claim 14, **characterized in that** the membrane frames (16) are provided with webs (28) which are directed toward one of the openings (32) in the feed frame (18).

16. Method according to Claim 15, **characterized in that** the webs (28) are designed in such a way that they extend in a radial distribution from the opening (32) in the feed frame (18) in the direction of a membrane edge.

17. Method according to one of Claims 14 to 16, **characterized in that** the membrane frames (16) are produced from a flat material into which the raised edges (22) and the at least one opening (24) and/or the webs (28) are stamped.

18. Method according to one of Claims 14 to 17, **characterized in that** the membrane frames (16) are stamped from sheet metal.

19. Method according to Claim 18, **characterized in that** the two membrane frames (16) of each membrane cell (2) are welded together at their raised edges (22).

20. Method according to one of Claims 14 to 19, **characterized in that** the feed frames (18) are continuous annular strips which are narrower than the raised edges (22) of the membrane frames (16).

21. Method according to Claim 20, **characterized in that** the openings (32, 34) in the feed frames (18) are formed by recesses in the strips.

22. Method according to one of Claims 14 to 21, **characterized in that** the feed frames (18) are made from metal.

23. Method according to Claim 18 and Claim 22, **characterized in that** the membrane frames (16) and the feed frames (18) are welded together.

24. Method according to Claim 23, **characterized in that** passages are welded on to the side faces of the stack and in each case connect corresponding openings (24) in the membrane frames (16) and/or openings (32, 34) in the feed frames (18) to one another and to the outer side.

25. Method according to one of Claims 14 to 24, **characterized in that** membrane cells (2) are arranged on the topmost and bottommost feed spaces (8) of the stack, in each case in the following order: a membrane frame (16) with installed membrane (4), a spacer layer (6) and an end plate (14).

26. Method according to one of Claims 14 to 25, **characterized in that** the external dimensions of the membrane frames (16), of the feed frames (18) and/or of the end plates (14) are formed by a rectangle with rounded corners.

## Revendications

1. Module à membranes pour la séparation d'hydrogène, qui présente plusieurs cellules planes à membranes dotées chacune de deux membranes planes sélectives vis-à-vis de l'hydrogène entourées chacune par un encadrement plat de membrane, une couche d'écartement perméable à l'air disposée entre les membranes pour évacuer le gaz de perméation et un encadrement d'amenée qui entoure un espace d'amenée de gaz de reformage, tous les encadrements de membrane et les encadrements d'amenée ayant les mêmes dimensions extérieures et formant un empilement dont les surfaces latérales sont planes,
**caractérisé en ce que**
les deux encadrements de membrane (16) de chaque cellule à membranes (2) ont des bords (22) en relief tournés l'un vers l'autre par lesquels ils sont en contact mutuel à l'exception d'au moins une ouverture (24) qui conduit vers une surface latérale de l'empilement, **en ce que** l'encadrement d'amenée (18) est configuré de telle sorte qu'à l'exception d'ouvertures (32, 34) orientées vers les surfaces latérales de l'empilement, il repose étroitement contre les bords des encadrements de membrane (16) de deux cellules à membranes (2) voisines et **en ce que** les côtés extérieurs de tous les encadrements de membrane (16) et des encadrements d'amenée (18) sont soudés ou brasés les uns aux autres de manière étanche au gaz, à l'exception des ouvertures (24, 32, 34).

2. Module à membranes selon la revendication 1, **caractérisé en ce que** les encadrements de membrane (16) contiennent des entretoises (28) qui sont dirigées vers l'une des ouvertures (32) ménagées dans l'encadrement d'amenée (18).

3. Module à membranes selon la revendication 2, **caractérisé en ce que** les entretoises (28) s'étendent en direction d'un bord de la membrane en étant réparties radialement partant de l'ouverture (32) ménagée dans l'encadrement d'amenée (18).

4. Module à membranes selon l'une des revendications précédentes, **caractérisé en ce que** les encadrements de membrane (16) sont constitués d'un matériau plat dans lequel les bords en relief (22) et la ou les ouvertures (24) et/ou les entretoises (28) sont embouties.

5. Module à membranes selon l'une des revendications précédentes, **caractérisé en ce que** les encadrements de membrane (16) sont constitués de tôle emboutie.

6. Module à membranes selon la revendication 5, **caractérisé en ce que** les deux encadrements de membrane (16) de chaque cellule à membranes (2) sont soudés l'un à l'autre sur leurs bords (22) en relief.

7. Module à membranes selon l'une des revendications précédentes, **caractérisé en ce que** les encadrements d'amenée (18) sont des rubans fermés en anneau plus étroits que les bords en relief (22) des encadrements de membrane (16).

8. Module à membranes selon la revendication 7, **caractérisé en ce que** les ouvertures (32, 34) ménagées dans les encadrements d'amenée (18) sont des gorges ménagées dans les rubans.

9. Module à membranes Selon l'une des revendications précédentes, **caractérisé en ce que** les encadrements d'amenée (18) sont réalisés en métal.

10. Module à membranes selon la revendication 6 et la revendication 9, **caractérisé en ce que** les encadrements de membrane (16) et les encadrements d'amenée (18) sont soudés les uns aux autres.

11. Module à membranes selon la revendication 10, **caractérisé en ce que** des canaux qui relient les unes aux autres et aux côtés extérieurs les ouvertures (24) qui se correspondent mutuellement dans les encadrements de membrane (16) ou les ouvertures (32, 34) ménagées dans les encadrements d'amenée (18) sont soudés sur les surfaces latérales de l'empilement.

12. Module à membranes selon l'une des revendications précédentes, **caractérisé en ce que** sur l'espace supérieur et l'espace inférieur d'amenée (8) de l'empilement, des cellules à membranes (2) sont disposées dans la succession constituée d'un encadrement de membrane (16) dans lequel une membrane (4) est montée, d'une couche d'écartement (6) et d'une plaque d'extrémité (14).

13. Module à membranes selon l'une des revendications précédentes, **caractérisé en ce que** les dimensions extérieures des encadrements de membrane (16), des encadrements d'amenée (18) et des plaques d'extrémité (14) sont formées par un rectangle à coins arrondis.

14. Procédé de fabrication d'un module à membranes pour la séparation d'hydrogène, dans lequel plusieurs cellules planes à membranes sont empilées et reliées les unes aux autres, chaque cellule à membranes étant constituées de deux membranes planes sélectives vis-à-vis de l'hydrogène entourées chacune par un encadrement plat de membrane, d'une couche d'écartement perméable à l'air disposée entre les membranes pour évacuer le gaz de perméation et d'un encadrement d'amenée qui entoure un espace d'amenée de gaz de reformage, tous les encadrements de membrane et les encadrements d'amenée ayant les mêmes dimensions extérieures et formant un empilement dont les surfaces latérales sont planes,
**caractérisé en ce que**
les deux encadrements de membrane (16) de chaque cellule à membranes (2) sont configurés avec des bords (22) en relief tournés l'un vers l'autre et sont posés les uns sur les autres par leur bord, les bords en relief (22) étant configurés de telle sorte qu'au moins une ouverture (24) reste libre vers une surface latérale de l'empilement, **en ce que** l'encadrement d'amenée (18) est configuré de telle sorte qu'à l'exception d'ouvertures (32, 34), il s'adapte étroitement sur les surfaces latérales de l'empilement aux bords (22) des encadrements de membrane (16) de deux cellules à membranes (2) voisines et **en ce que** les côtés extérieurs de tous les encadrements de membrane (16) et encadrements d'amenée (18) sont soudés ou brasés les uns aux autres de manière étanche, à l'exception des ouvertures (24, 32, 34).

15. Procédé selon la revendication 14, **caractérisé en ce que** les encadrements de membrane (16) sont dotés d'entretoises (28) qui sont dirigées vers l'une des ouvertures (32) ménagées dans l'encadrement d'amenée (18).

16. Procédé selon la revendication 15, **caractérisé en ce que** les entretoises (28) sont configurées de telle sorte qu'elles sont réparties radialement partant de l'ouverture (32) ménagée dans l'encadrement d'amenée (18).

17. Procédé selon l'une des revendications 14 à 16, **caractérisé en ce que** les encadrements de membrane (16) sont fabriqués à partir d'un matériau plat dans lequel les bords en relief (22) et la ou les ouvertures (24) et/ou les entretoises (28) sont embouties.

18. Procédé selon l'une des revendications 14 à 17, **caractérisé en ce que** les encadrements de membrane (16) sont constitués de tôle emboutie.

19. Procédé selon la revendication 18, **caractérisé en ce que** les deux encadrements de membrane (16) de chaque cellule à membranes (2) sont soudés l'un à l'autre sur leurs bords (22) en relief.

20. Procédé selon l'une des revendications 14 à 19, **caractérisé en ce que** les encadrements d'amenée (18) sont des rubans fermés en anneau plus étroits que les bords en relief (22) des encadrements de membrane (16).

21. Procédé selon la revendication 20, **caractérisé en ce que** les ouvertures (32, 34) ménagées dans les encadrements d'amenée (18) sont des gorges ménagées dans les rubans.

22. Procédé selon l'une des revendications 14 à 21, **caractérisé en ce que** les encadrements d'amenée (18) sont réalisés en métal.

23. Procédé selon la revendication 18 et la revendication 22, **caractérisé en ce que** les encadrements de membrane (16) et les encadrements d'amenée (18) sont soudés les uns aux autres.

24. Procédé selon la revendication 23, **caractérisé en ce que** des canaux qui relient les unes aux autres et aux côtés extérieurs les ouvertures (24) qui se correspondent mutuellement dans les encadrements de membrane (16) ou les ouvertures (32, 34) ménagées dans les encadrements d'amenée (18) sont soudés sur les surfaces latérales de l'empilement.

25. Procédé selon l'une des revendications 14 à 24, **caractérisé en ce que** sur l'espace supérieur et l'espace inférieur d'amenée (8) de l'empilement, des cellules à membranes (2) sont disposées dans la succession constituée d'un encadrement de membrane (16) dans lequel une membrane (4) est montée, d'une couche d'écartement (6) et d'une plaque d'extrémité (14).

26. Procédé selon l'une des revendications 14 à 25, **caractérisé en ce que** les dimensions extérieures des encadrements de membrane (16), des encadrements d'amenée (18) et des plaques d'extrémité (14) sont formées par un rectangle à coins arrondis.
